# EUROPEAN PATENT APPLICATION

(11) **EP 4 082 833 A1**
(43) Date of publication of application: **02.11.2022**
(21) Application number: 22305586.4
(22) Date of filing: 21.04.2022
(51) Int. Cl.: B60Q 3/43, B60Q 3/51

(54) **LIGHTING ASSEMBLY FOR A PUBLIC TRANSPORT VEHICLE**

(30) Priority: 28.04.2021 IT 202100010730
(71) Applicant: IVECO FRANCE S.A.S., 69200 Vénissieux (FR)
(72) Inventor: NIGNOL, Christophe, 49300 CHOLET (FR); GATARD, Christophe, 79300 BRESSUIRE (FR); BEZIER, Bastien, 49300 CHOLET (FR)
(74) Representative: Faraldi, Marco

(57) **Abstract**

Vehicle comprising a lighting assembly (10) for a public transport vehicle (1), comprising a support portion (12) configured to be fixed to a wall (5) of the vehicle (1) and a cover (13) configured to be releasably carried by the support portion (12), and a plurality of lighting means (15) housed in a space (14) delimited between said support portion (12) and said cover (13), the support portion (12) defining a plurality of support area (17) for supporting the lighting means (15) , the cover (13) being realized in a material that allows the passage of lights through thereof and comprising a central portion (13a) faced to the lighting means (15) realized in different portions (13', 13ʺ, 13‴) having different translucid properties, the different portions (13', 13ʺ, 13‴) being placed in front of a respective lighting means (15) to vary the transmission of the respective light means (15) into the vehicle (1).

## Description

### CROSS-REFERENCE TO RELATED APPLICATIONS

This patent application claims priority from Italian patent application no. 102021000010730 filed on April 28, 2021.

### TECHNICAL FIELD

The present invention concerns a lighting assembly, in particular a lighting assembly for a public transport vehicle.

The present invention finds its preferred, although not exclusive, application in buses for public transport of passengers.

### BACKGROUND OF THE INVENTION

Vehicle for public transport of passengers such as buses are provided with lighting system for allowing different lighting of the internal space that allows the transport of passengers.

Clearly, lighting conditions may vary according to the typology of roof, to the presence of doors and to the length of the mission of the vehicle.

Existing systems are not sufficiently versatile to provide sufficient lighting condition for all the above mentioned necessities.

Therefore, the need is felt to improve existing lighting systems to provide a better lighting of the internal space of a vehicle for public transport.

An aim of the present invention is to satisfy the above mentioned needs in a cost effective and optimized way.

### SUMMARY OF THE INVENTION

The aforementioned aim is reached by a vehicle and a ceiling assembly as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view showing a portion of a vehicle comprising a lighting assembly according to the present invention;
- Figure 2 is a sectional view showing a portion of the vehicle of figure 1;
- Figure 3 is a sectional schematic view showing a lighting assembly according to the invention;
- Figure 4 is a sectional schematic view showing a lighting assembly according to the invention with illustration of light beams provided by this latter;
- Figure 5 is a sectional schematic view showing a lighting assembly according to a further embodiment according to the invention; and
- Figure 6 is a sectional schematic view showing a lighting assembly according to an alternative embodiment of the assembly of figure 4.

### DETAILED DESCRIPTION OF THE INVENTION

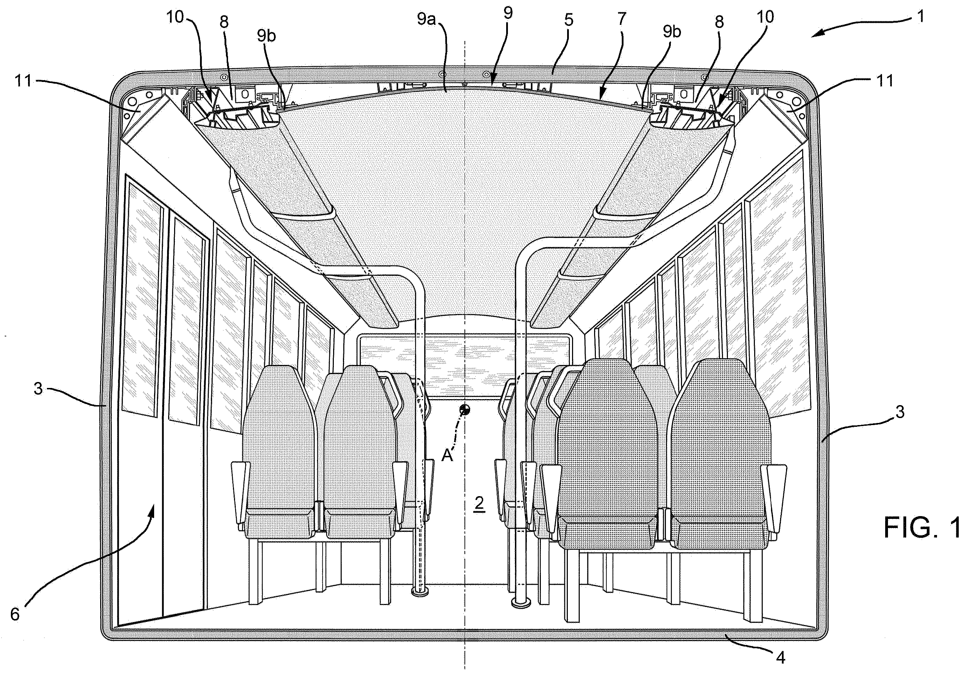

Figure 1 discloses a vehicle 1 for public transport of passengers, e.g. a bus, comprising a plurality of walls defining an inner space 2 suitable for transporting passengers.

In particular, the vehicle 1 comprises a pair of lateral walls 3, a ground 4, a roof 5, a front and a rear walls delimiting the inner space 2. As known, the passenger may access or get out with respect to inner space 2 through doors 6 realized in the lateral walls 3.

The roof 5 is separated from the inner space 2 through a ceiling assembly 7 configured to delimit a space 8 adjacent to roof 5 to house different operational cables and conduits of the vehicle 1.

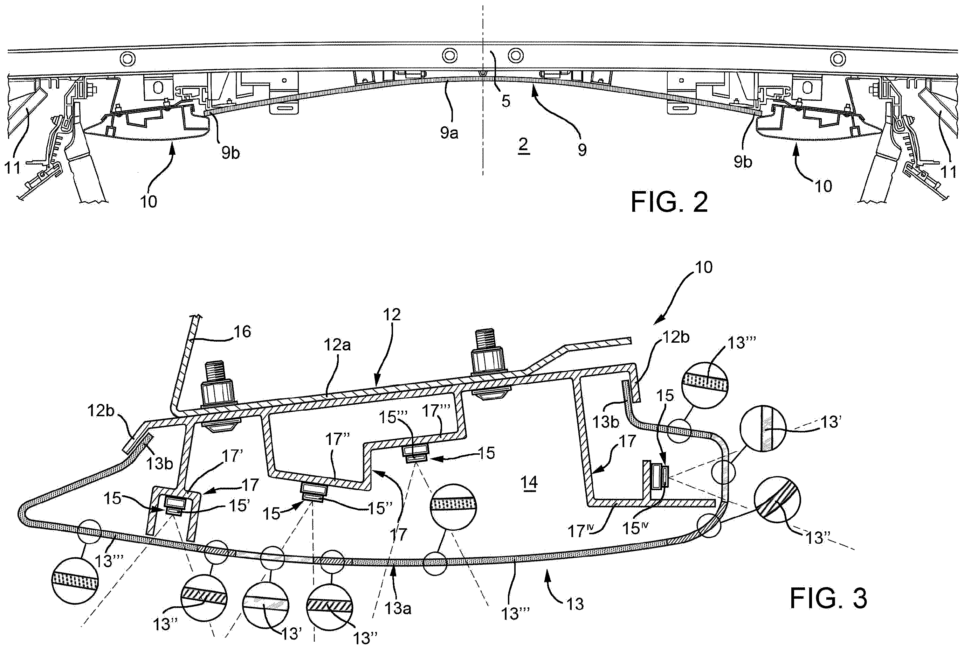

The ceiling assembly 7, as schematically shown in figure 2, essentially comprises a central plate 9, a pair of lighting assemblies 10 according to the invention and a pair of corner elements 11.

In greater detail, the central plate 9 extends along a longitudinal axis A of the vehicle almost on its entire length and extends transversally along roof 5 more than the pair of lighting assemblies 10 and the pair of corner elements 11.

In particular, the central plate 9 has a symmetrical shape with respect to axis A and defines a curved shape, more preferably a concave shape with respect to inner space 2. Therefore, the central plate 9 defines a central portion 9a and a pair of lateral portions 9b; according to the above concave shape, the central portion 9a is placed vertically above with respect to the lateral portions 9b.

Preferably, the central plate 9 comprises a single curved element realized in a reflective material, such as celamine^{™}.

The corner elements 11 joint the roof 5 and a respective lateral wall 3; preferably, each corner element 11 is hollow to house conduits and cables for allowing the operation of different operational elements of the vehicle.

Preferably, corner elements 11 are realized as profiled elements and, according to the provided exemplarily embodiment, of triangular cross-section along axis A. More preferably, corner elements 11 have symmetrical shape with respect to axis A.

In the following, the description will be referred to the right lighting assemblies 10, being symmetrical to the left lighting assembly 10 with respect to axis A and making reference to different embodiment of figures 3, 4 and 5.

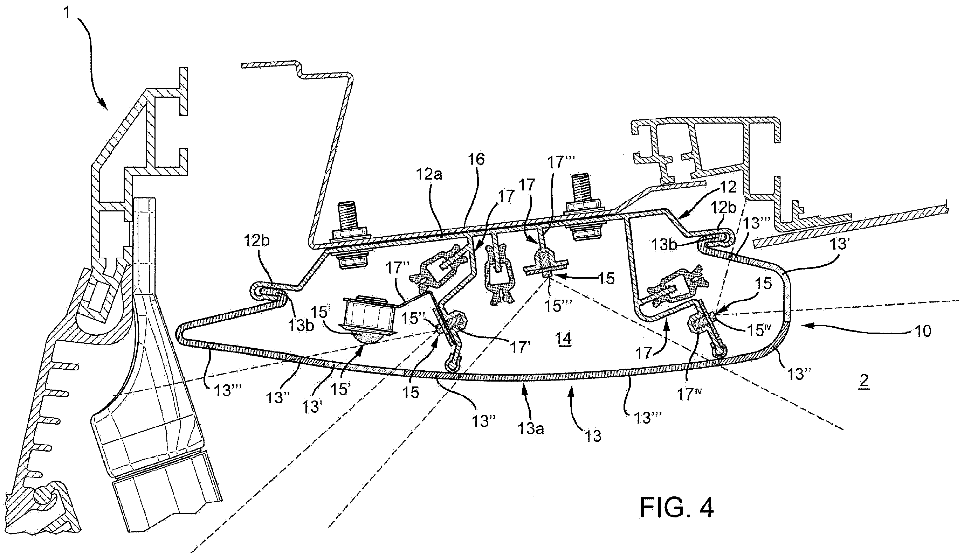

According to the embodiment of figure 4, the lighting assembly essentially comprises a support portion 12 and a cover 13 that is releasably carried by the support portion 12. The support portion 12 and the cover 13 delimits a closed space 14 for housing a plurality of lighting means 15.

In particular, the support portion 12 comprises a connecting portion 12a configured to allow the fixation of the latter to the roof 5. In greater detail the connecting portion 12a is a substantially flat wall that is provided with holes to allow the connection of the connecting portion 12a to roof via reversible connection means such as threaded elements. In particular, in the disclosed example, the connecting portion 12a is configured to be carried by a flanged element 16 fixedly carried by roof 5.

The support portion 12 further defines a pair of seats 12b, laterally placed with respect to central portion 12a, and configured to house respective terminal portions 13b of cover 13. Cover 13 is advantageously realized as flexible so that can be stretched to allow the insertion of both terminal portions 13b in the respective seats 12b thereby connecting together support portion 12 and cover 13. In particular, cover 13 is made of plastic material such as polycarbonate.

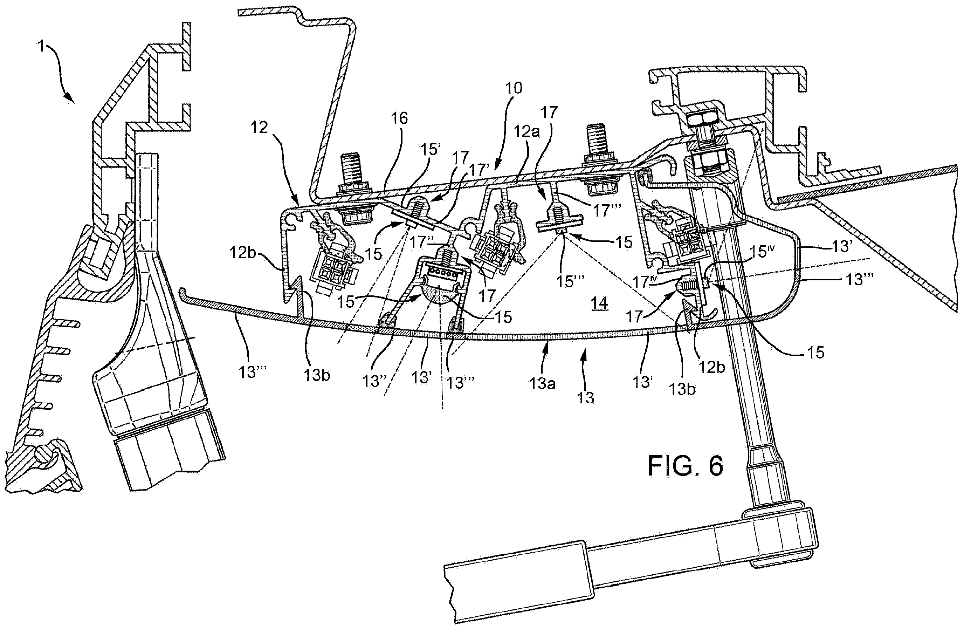

In particular, in the embodiment of figures 3 and 6, the terminal portions 13b of cover 13 are hook-shaped so that, one inserted in the respective seat 12b, cannot be extracted without stretching cover 13 itself.

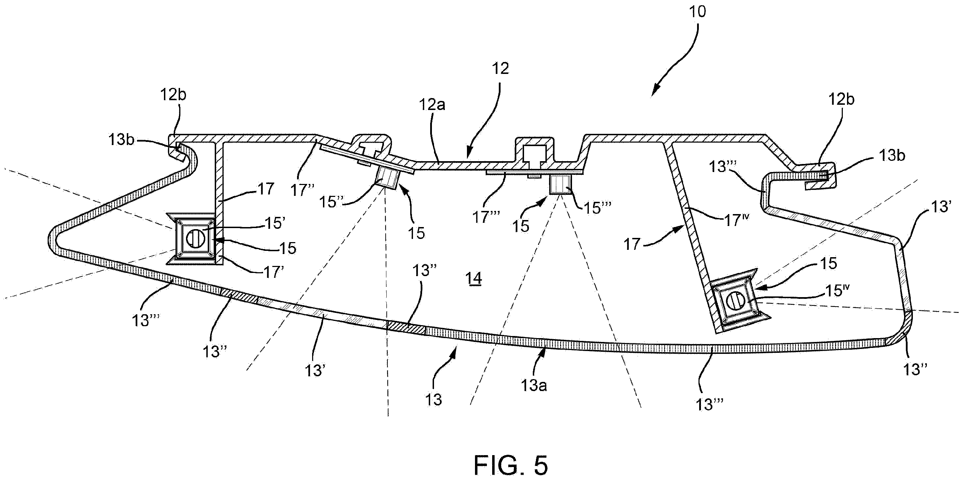

Alternatively, in the embodiments of figures 4 and 5, the terminal portions 13b of cover 13 are simply coupled at contact with the respective seat 12b and inclined so that they cannot be extracted without stretching cover 13 itself.

The support portion 12 further defines a plurality of flanged portions 17, extending inside closed space 14 towards cover 13 and defining supports for respective lighting means 15.

In particular, the support portion 12 defines a first support area 17' directed to support a lighting means 15" configured to indirect lighting of lateral wall 3, a second support area 17" directed to support a lighting means 15' configured to lighting of door 6, a third support area 17‴ directed to support a lighting means 15‴ configured to main lighting of inner space 2 and a fourth support area 17^{IV} directed to support a lighting means 15^{IV} configured to indirect lighting of central portion 9.

In particular, the lighting means 15 mentioned above may be present or absent according to the configuration of the vehicle. In particular, the lighting means 15 for main lighting of central portion 9 is always present, while the others lighting means 15 may be present singularly or in different combinations.

In the embodiment of figure 3, the first and fourth support area 17', 17^{IV} are realized on respective flanges directed, respectively, towards lateral wall 3 or central portion 9, while second and third support areas 17ʺ, 17‴ are realized on a single protruding portion extending from the support portion 12 and defining two different height and inclination for the support areas 17", 17‴ so that the supported lighting means directed to the respective target.

In the embodiment of figure 4, first, third and fourth support areas area 17', 17‴, 17^{IV} are realized on respective flanges inclined so that the supported lighting means 15 are directed to the respective target. The second support area 17" is realized on a flange carried by the flange carrying the first support area 17" and directed towards lateral wall 3. Similar construction is present on figure 6 embodiment and therefore not repeated for sake of brevity.

In the embodiment of figure 5, first and fourth support areas area 17', 17^{IV} are realized on respective flanges inclined so that the supported lighting means 15 are directed to the respective target. The second and third support areas 17ʺ, 17‴ are directly realized on the central portion 12a of the support portion 12 so that the supported lighting means 15 are directed to the respective target.

Preferably, support portion 12 is realized in metal and as one piece, more preferably in aluminum.

The cover 13 comprises a central portion 13a that extends between the terminal portions 13b, i.e. along a transversal direction with respect to longitudinal axis A and that is faced to lighting means 15. Central portion 13a is realized in a material that allows the passage of light provided by lighting means 15. In particular, central portion 13a may be realized in a polymeric material such as plastic.

In greater detail, central portion 13a is subdivided in different portions that have different translucid properties, i.e. having different optical properties allowing a different quantity of light to pass through the cover 13.

In particular, the cover 13 defines three portions:
- A first translucid portion 13' that allows the passage of a great quantity of light, preferably transparent thereby allowing to pass all light through themselves;
- A second translucid portion 13" that allows the passage of a limited quantity of light, preferably opaque to allow the passage of quite zero quantity of light; and
- A third translucid portion 13‴ that allows the passage of a quantity of light intermediate with respect to the first and the second translucid portions 13', 13".

Making reference to figure 3 embodiment, the portion of cover 13 invested by the light beam provided by lighting means 15' carried by first support area 17' is a third translucid portion 13‴, the portion of cover invested by the light beam provided by lighting means 15" carried by second support area 17" is a first translucid portion 13' comprised between two second translucid portions 13ʺ, the portion of cover invested by the light beam provided by lighting means 15‴ carried by third support area 17‴ is a third translucid portion 13‴ and the portion of cover invested by the light beam provided by lighting means 15^{IV} carried by fourth support area 17 ^{IV} is a first translucid portion 13' comprised between a second translucid portion 13" and a third translucid portion 13‴.

A similar succession is provided to cover 13 of figures 4, 5 and 6 that will be not described for sake of brevity and that is clearly represented in such figures.

Lighting means 15 may be LED, Light Emitting Diodes, that are electrically connected to an electronic control unit of the vehicle devoted to control lighting means automatically or on the base of a manual selection of the driver.

Clearly, lighting means 10 extends all over the length along axis A of vehicle 1. Different portions of cover 13 along the length of the vehicle may be jointed together via translucid joint portions (not shown).

According to figure 6 embodiment, it is noticed that at least one of support areas 17, in the described case flange portion 17^{IV} extends into space 14 and the central portion 12a extends transversally with respect to vehicle's longitudinal axis so that there is a free space over a portion of the flanged portion 16 carried by roof.

With free space it is intended a space that it is normally occupied by cover 13 but, when not occupied by this latter, it may be used for allowing to a user to make operations directly on flanged portion 16, i.e. to allow fixation of other elements of the vehicle via a specific tool as exemplarily shown in figure 6.

The operation of the lighting system according to the invention is the following, making reference to the embodiment of figure 3, in a configuration wherein all lighting means 15 are present.

The user may select the activation of one or more lighting means 15. Once activated, they project the lights along a beam that is inclined according to their position depending on support area 17 and that is opened according to their lighting characteristic.

In particular, the first lighting means 15 will provide a smooth lighting through a third translucid portion 13‴ of cover 13 to the wall 3 of the vehicle, the second lighting means 15 will provide an indirect lighting through a first translucid portion 13' of cover 13 in front of door 6 of the vehicle, the third lighting means 15 will provide a main lighting through a third translucid portion of cover 13 in space 2 and the fourth lighting means 15 will provide an indirect lighting through a first translucid portion 13' of cover 13 to the central plate 9.

In view of the foregoing, the advantages of a lighting assembly, ceiling assembly and vehicle according to the invention are apparent.

Thanks to the proposed lighting assembly it is possible to effectively lighting the internal space of the vehicle with different gradation of lighting.

In particular, it is possible to provide direct, smooth or top-directed light without a complex and expensive lighting system.

Moreover, the proposed lighting system is easily accessible to substitution of lighting means and can be easily mounted.

Furthermore, the presence of the free space over the flanged portion 16 allows the fixation of other elements on such portion without spatial conflicts with support portion 12 of the lighting assembly 10.

It is clear that modifications can be made to the vehicle and ceiling assembly which do not extend beyond the scope of protection defined by the claims.

As said, the lighting means 15 may be all present or absent within the claimed configurations.

Furthermore, it is clear that shape of support portion 12 or cover 13 may vary. Moreover, the shape and number of support area 17 may vary. Such variation may be functional to the peculiar shape of the vehicle 1.

Moreover, the cover may comprise different succession of translucid portions with respect to the above described ones along a transversal direction with respect to longitudinal axis of the vehicle.

Similarly, shape of central portion 9 or corner elements 11 may vary according to the typology of vehicle 1.

## Claims

1. Vehicle for public transport of passengers provided with a lighting assembly (10) comprising a support portion (12) configured to be fixed to a wall (5) of said vehicle (1) and a cover (13) configured to be releasably carried by said support portion (12), said support portion (12) and said cover (13), when coupled, delimiting a closed space (14), said lighting assembly (10) extending parallel to a longitudinal axis (A) of said vehicle and housing a plurality of lighting means (15) in said closed space (14), said support portion (12) defining a plurality of support area (17) for supporting said lighting means (15) to direct the light provided by these latter towards a specific point of said vehicle (1), said cover (13) being realized in a material that allows the passage of lights through thereof and comprising a central portion (13a) faced to said lighting means (15) realized in different portions (13', 13ʺ, 13‴) having different translucid properties, said different portions (13', 13'', 13‴) being placed in front of a respective lighting means (15) to vary the transmission of the respective light means (15) into said vehicle (1), wherein said cover (13) defines three different portions:
• A first translucid portion (13') that is substantially transparent thereby allowing to pass all light provided by said lighting means (15) through it;
• A second translucid portion (13") that is opaque to allow the passage of quite-zero quantity of light provided by said lighting means (15) through it; and
• A third translucid portion (13‴) that allows the passage of a quantity of light intermediate with respect to said first and the second translucid portions (13', 13ʺ).

2. Vehicle according to claim 1, wherein said three portions (13', 13ʺ, 13‴) are interposed one with respect to the other along a transversal direction with respect to said longitudinal axis (A).

3. Vehicle according to any of the preceding claims, wherein said support portion (12) comprises a central portion (12a) configured to be fixed to said wall of said vehicle (1) and a pair of seats (12b) configured to be coupled in contact with respective terminal portions (13b) of said cover (13) .

4. Vehicle according to claim 3, wherein said seats (12b) allow the insertion of said terminal portions (13b) of said cover (13).

5. Vehicle according to claim 3, wherein said seats (12b) allow a contact coupling of said terminal portions (13b) of said cover (13).

6. Vehicle according to any of claims 3 to 5, wherein said support area (17) are realized directly on said central portion (12a).

7. Vehicle according to any of claims 3 to 5, wherein said support area (17) are realized on flanges (16) extending from said central portion (12) towards said cover (13) in said space (14).

8. Vehicle according to any of the preceding claims, wherein said cover is realized in polymeric material.

9. Vehicle according to any of the preceding claims, wherein said support portion (12) is made as one piece.

10. Vehicle according to any of the preceding claims, wherein said support portion (12) is made of aluminum.

11. Vehicle according to claim 7, wherein said flanges (16) and said support portion (12) extends so that a portion of said wall (5) is free to be reached by a user when said cover (13) is not coupled to said support portion (12).

12. Ceiling assembly (7) for a public transport vehicle (1), said ceiling assembly (7) being carried by a roof (5) and spaced with respect to this latter, said ceiling assembly (7) comprising a central element (9) carried by said roof (5) comprising a central portion (9a) and a pair of lateral portions (9b), said ceiling assembly (7) comprising a pair of lighting assembly (10), each of said lighting assembly (10) being placed laterally with respect to said lateral portions (9b) and comprising a support portion (12) configured to be fixed to a wall (5) of said vehicle (1) and a cover (13) configured to be releasably carried by said support portion (12), said support portion (12) and said cover (13), when coupled, delimiting a closed space (14), said lighting assembly (10) extending parallel to a longitudinal axis (A) of said vehicle and housing a plurality of lighting means (15) in said closed space (14), said support portion (12) defining a plurality of support area (17) for supporting said lighting means (15) to direct the light provided by these latter towards a specific point of said vehicle (1), said cover (13) being realized in a material that allows the passage of lights through thereof and comprising a central portion (13a) faced to said lighting means (15) realized in different portions (13', 13", 13‴) having different translucid properties, said different portions (13', 13'', 13‴) being placed in front of a respective lighting means (15) to vary the transmission of the respective light means (15) into said vehicle (1), wherein said cover (13) defines three different portions:
• A first translucid portion (13') that is substantially transparent thereby allowing to pass all light provided by said lighting means (15) through it;
• A second translucid portion (13'') that is opaque to allow the passage of quite-zero quantity of light provided by said lighting means (15) through it; and
• A third translucid portion (13‴) that allows the passage of a quantity of light intermediate with respect to said first and the second translucid portions (13', 13").

13. Ceiling assembly according to claim 12, wherein said central element (9) is made of reflective material.

14. Ceiling assembly according to claim 12, wherein said central element (9) has a curved shape wherein said lateral portions (9b) are vertically lower with respect to said central portion (9a).

15. Vehicle for public transport of passengers comprising a ceiling assembly (7) according to any of claims 12 to 14.
